(19) **Europäisches Patentamt European Patent Office Office européen des brevets**

(11) **EP 4 564 696 A1**

(12) **EUROPEAN PATENT APPLICATION**
published in accordance with Art. 153(4) EPC

(43) Date of publication:
04.06.2025 Bulletin 2025/23

(21) Application number: 23846933.2

(22) Date of filing: 24.07.2023

(51) International Patent Classification (IPC):
$H04B\ 7/06^{(2006.01)}$     $H04B\ 7/024^{(2017.01)}$
$H04W\ 24/08^{(2009.01)}$    $H04W\ 52/02^{(2009.01)}$
$H04B\ 17/345^{(2015.01)}$   $H04B\ 7/08^{(2006.01)}$

(52) Cooperative Patent Classification (CPC):
H04B 7/024; H04B 7/06; H04B 7/08; H04B 17/345;
H04W 24/08; H04W 52/02

(86) International application number:
PCT/KR2023/010628

(87) International publication number:
WO 2024/025274 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.07.2022  KR 20220092241
26.09.2022  KR 20220121988
04.05.2023  KR 20230058577
08.05.2023  US 202363464932 P

(71) Applicant: LG Electronics Inc.
Yeongdeungpo-gu
Seoul 07336 (KR)

(72) Inventors:
• KIM, Hyungtae
Seoul 06772 (KR)
• KANG, Jiwon
Seoul 06772 (KR)
• KIM, Seonwook
Seoul 06772 (KR)

(74) Representative: Plasseraud IP
104 Rue de Richelieu
CS92104
75080 Paris Cedex 02 (FR)

(54) **METHOD FOR TRANSMITTING CHANNEL STATUS INFORMATION FOR MULTIPLE TRP-BASED TRANSMISSION IN WIRELESS COMMUNICATION SYSTEM, AND APPARATUS THEREFOR**

(57) The present disclosure relates to a method performed by user equipment (UE) in a wireless communication system. Particularly, the method comprises the steps of: receiving, from a base station (BS), information regarding a plurality of measurement resources corresponding to a multiple transmission and reception point (M-TRP); on the basis of the plurality of measurement resources, calculating channel status information (CSI) related to the M-TRP-based coherent joint transmission (CJT); and transmitting, to the BS, the CSI related to the M-TRP-based CJT, wherein the number of CSI processing units (CPUs) for calculating the CSI related to the M-TRP-based CJT is determined on the basis of the number of channel measurement resources (CMRs) from among the measurement resources

[FIG.8]

Receiving information on measurement resources corresponding to M-TRP — A05

Calculating CSI related to M-TRP based CJT — A10

Transmitting CSI related to M-TRP based CJT — A15

Processed by Luminess, 75001 PARIS (FR)

**Description**

## TECHNICAL FIELD

The present disclosure relates to a wireless communication system, and more particularly, to a method of transmitting channel state information for multiple TRP-based transmission in a wireless communication system and apparatus therefor.

## BACKGROUND ART

Wireless communication systems are being widely deployed to provide various types of communication services such as voice and data. In general, a wireless communication system is a multiple access system that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

## DISCLOSURE

## TECHNICAL PROBLEMS

Based on the discussion as described above, hereinafter, a method of transmitting channel state information for multiple TRP-based transmission in a wireless communication system and apparatus therefor will be proposed.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

## TECHNICAL SOLUTIONS

In one technical aspect of the present disclosure, provided is a method performed by a User Equipment (UE) in a wireless communication system, the method including receiving, from a Base Station (BS), information on a plurality of measurement resources related to a Multiple Transmission and Reception Point (M-TRP), computing, Channel Status Information (CSI) related to M-TRP based Coherent Joint Transmission (CJT) based on a plurality of the measurement resources, and transmitting, to the BS, the CSI related to the M-TRP based CJT, wherein the number of CSI Processing Units (CPUs) for computing the CSI related to the M-TRP based CJT is determined based on the number of Channel Measurement Resources (CMRs) among the measurement resources.

In another technical aspect of the present disclosure, provided is a User Equipment (UE) in a wireless communication system, the UE including at least one transceiver, at least one processor, and at least one computer memory operably connectable to the at least one processor and storing instructions enabling the at least one processor to perform operations when executed, the operations including receiving, from a Base Station (BS), information on a plurality of measurement resources related to a Multiple Transmission and Reception Point (M-TRP), computing, Channel Status Information (CSI) related to M-TRP based Coherent Joint Transmission (CJT) based on a plurality of the measurement resources, and transmitting, to the BS, the CSI related to the M-TRP based CJT, wherein the number of CSI Processing Units (CPUs) for computing the CSI related to the M-TRP based CJT is determined based on the number of Channel Measurement Resources (CMRs) among the measurement resources.

In another technical aspect of the present disclosure, provided is an apparatus for processing in a wireless communication system, the apparatus including at least one processor and at least one computer memory operably connectable to the at least one processor and storing instructions enabling the at least one processor to perform operations for a User Equipment (UE) when executed, the operations including receiving, from a Base Station (BS), information on a plurality of measurement resources related to a Multiple Transmission and Reception Point (M-TRP), computing, Channel Status Information (CSI) related to M-TRP based Coherent Joint Transmission (CJT) based on a plurality of the measurement resources, and transmitting, to the BS, the CSI related to the M-TRP based CJT, wherein the number of CSI Processing Units (CPUs) for computing the CSI related to the M-TRP based CJT is determined based on the number of Channel Measurement Resources (CMRs) among the measurement resources.

In another technical aspect of the present disclosure, provided is a computer-readable storage medium storing at least one program code comprising instructions enabling at least one processor to perform operations for a User Equipment (UE) when executed, the operations including receiving, from a Base Station (BS), information on a plurality of measurement resources related to a Multiple Transmission and Reception Point (M-TRP), computing, Channel Status Information (CSI) related to M-TRP based Coherent Joint Transmission (CJT) based on a plurality of the measurement resources, and transmitting, to the BS, the CSI related to the M-TRP based CJT, wherein the number of CSI Processing Units (CPUs) for computing the CSI related to the M-TRP based CJT is determined based on the number of Channel Measurement Resources (CMRs) among the measurement resources.

In another technical aspect of the present disclosure, provided is a method performed by a Base Station (BS) in a wireless communication system, the method including receiving, from a User Equipment (UE), UE capability information related to a Multiple Transmission and Reception Point (M-TRP) based Coherent Joint Transmission (CJT), transmitting, to the UE, information on a plurality of measurement resources related to the M-TRP, and receiving, from the UE RSU, Channel Status Information (CSI) related to the M-TRP based CJT computed based on a plurality of the measurement resources, wherein the UE capability information comprises information on the number of CSI Processing Units (CPUs) supportable by the UE per the number of Channel Measurement Resources (CMRs) among the measurement resources and wherein the number of the CPUs for computing the CSI related to the M-TRP based CJT is determined based on the number of the CMRs.

In further technical aspect of the present disclosure, provided is a Base Station (BS) in a wireless communication system, the BS including at least one transceiver, at least one processor, and at least one computer memory operably connectable to the at least one processor and storing instructions enabling the at least one processor to perform operations when executed, the operations including receiving, from a User Equipment (UE), UE capability information related to a Multiple Transmission and Reception Point (M-TRP) based Coherent Joint Transmission (CJT), transmitting, to the UE, information on a plurality of measurement resources related to the M-TRP, and receiving, from the UE RSU, Channel Status Information (CSI) related to the M-TRP based CJT computed based on a plurality of the measurement resources, wherein the UE capability information comprises information on the number of CSI Processing Units (CPUs) supportable by the UE per the number of Channel Measurement Resources (CMRs) among the measurement resources and wherein the number of the CPUs for computing the CSI related to the M-TRP based CJT is determined based on the number of the CMRs.

In each aspect of the present disclosure, the number of the CPUs for computing the CSI related to the M-TRP based CJT may be determined based on the number of CMR combinations comprising at least one CMR farm and the number of the CPUs related to each of the CMR combinations.

In each aspect of the present disclosure, the number of the CPUs for computing the M-TRP based CJT may be determined as $\sum_{i=1,2,...,M}^{M}\left(i * C_i^M\right)$ (where M is the number of the CMRs).

In each aspect of the present disclosure, the UE may receive, from the BS, a transmission request signal of a CSI related to the M-TRP based CJT, and a first minimum time interval between receiving the transmission request signal and transmitting the CSI related to the M-TRP-based CJT and a second minimum time interval between receiving all the measurement resources configured by the BS for reporting the CSI related to the M-TRP-based CJT and transmitting the CSI related to the M-TRP-based CJT may be determined based on the number of the CMRs.

In each aspect of the present disclosure, the UE may transmit UE capability information related to the M-TRP-based CJT to the BS and the UE capability information may include information on the number of CPUs supportable per the number of the CMRs.

In each aspect of the present disclosure, a plurality of the measurement resources may further include an Interference Measurement Resource (IMR).

The above solutions are only some of the examples of the disclosure, and various examples reflecting the technical features of the disclosure may be derived and understood from the following detailed description by those skilled in the art.

## ADVANTAGEOUS EFFECTS

According to the disclosure, wireless signal transmission and reception may be efficiently performed in a wireless communication system.

It will be appreciated by persons skilled in the art that the technical effects that could be achieved with the disclosure are not limited to what has been particularly described hereinabove and the above and other technical effects that the disclosure could achieve will be more clearly understood from the following detailed description.

## DESCRIPTION OF DRAWINGS

The accompanying drawings are provided to help understanding of the embodiment, along with a detailed description. However, the technical features of the embodiment are not limited to a specific drawing, and features disclosed in each drawing may be combined with each other to constitute a new embodiment. Reference numerals in each drawing denote structural elements:

FIG. 1 illustrates physical channels used in a 3rd generation partnership project (3GPP) system, which is an example of wireless communication systems, and a general signal transmission method using the same.

FIG. 2 illustrates a radio frame structure.

FIG. 3 illustrates a resource grid of a slot.

FIG. 4 illustrates exemplary mapping of physical channels in a slot;

FIG. 5 illustrates an exemplary process of transmitting a physical downlink shared channel (PDSCH) and an acknowledgment/negative acknowledgment (ACK/NACK).

FIG. 6 illustrates an exemplary physical uplink shared channel (PUSCH) transmission process.

FIG. 7 illustrates an example of a channel state information (CSI) related procedure.

FIG. 8 is a flowchart illustrating an example of transmitting CSI related to an M-TRP-based CJT by a UE according to embodiments of the present disclosure.

FIG. 9 is a flowchart illustrating an example of receiving CSI related to an M-TRP-based CJT by a BS according to embodiments of the present disclosure.

FIG. 10 to FIG. 13 illustrate a communication system (1) and a wireless device applicable to the disclosure.

## BEST MODE

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

While the disclosure is described mainly in the context of 3GPP NR for clarity of description, the technical idea of the disclosure is not limited to 3GPP NR.

In the specification, the expression "setting" may be replaced with the expression "configure/configuration", and the two may be used interchangeably. In addition, conditional expressions (e.g., "if ~~", "in a case ~~", "when ~~", or the like) may be replaced with the expression "based on that ~~" or "in a state/status ~~". Further, an operation of a user equipment (UE)/base station (BS) or an SW/HW configuration according to the satisfaction of the condition may be inferred/understood. Further, when a process of a receiving (or transmitting) side may be inferred/understood from a process of the transmitting (or receiving) side in signal transmission/reception between wireless communication devices (e.g., a BS and a UE), its description may be omitted. For example, signal determination/generation/encoding/transmission on the transmitting side may be understood as signal monitoring reception/decoding/determination on the receiving side. In addition, when it is said that a UE performs (or does not perform) a specific operation, this may also be interpreted as meaning that a BS operates expecting/assuming that the UE performs the specific operation (or expecting/assuming that the UE does not perform the specific operation). In addition, when it is said that a BS performs (or does not perform) a specific operation, this may also be interpreted as meaning that a UE operates expecting/assuming that the BS performs the specific operation (or expecting/assuming that the BS does not perform the specific operation). In addition, the identification and index of each section, embodiment, example, option, method, plan, or the like in the following description are for the convenience of description, and should not be interpreted as meaning that each forms an independent disclosure or that each should be implemented individually. In addition, unless there is an explicitly conflicting/opposing description in describing each section, embodiment, example, option, method, plan, or the like, it may be inferred/interpreted as meaning that at least some of them may be implemented together in combination, or they may be implemented with at least some of them omitted.

In a wireless communication system, a UE receives information through downlink (DL) from a BS and transmit information to the BS through uplink (UL). The information transmitted and received by the BS and the UE includes data and various control information and includes various physical channels according to type/usage of the information transmitted and received by the UE and the BS.

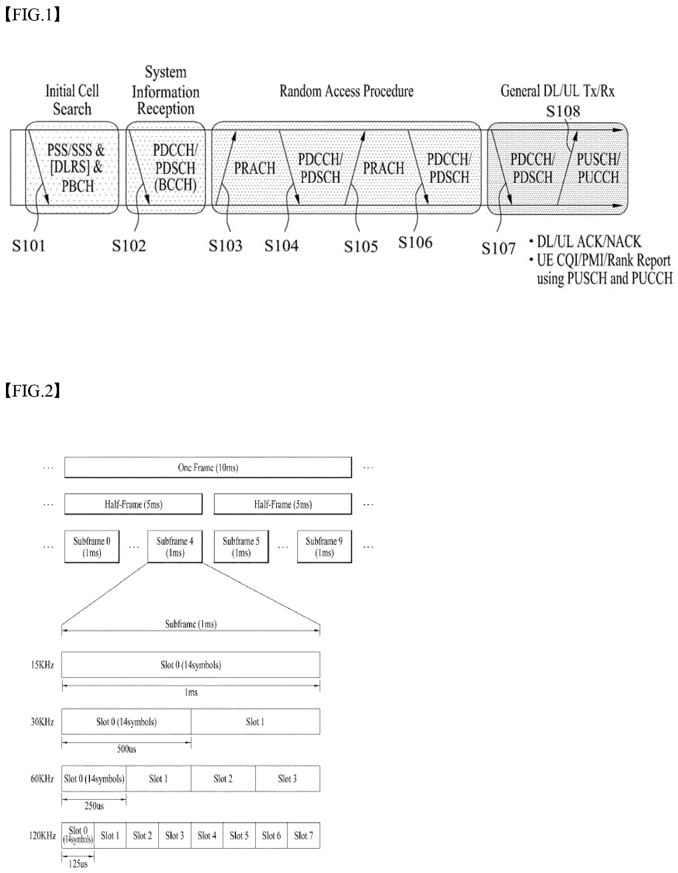

FIG. 1 is a diagram illustrating physical channels and a signal transmission method using the physical channels, in 3GPP NR system.

When powered on or when a UE initially enters a cell, the UE performs initial cell search involving synchronization with a BS in step S101. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

Subsequently, to complete connection to the eNB, the UE may perform a random access procedure with the eNB (S103 to S106). In the random access procedure, the UE may transmit a preamble on a physical random access channel (PRACH) (S103) and may receive a PDCCH and a random access response (RAR) for the preamble on a PDSCH associated with the PDCCH (S104). The UE may transmit a physical uplink shared channel (PUSCH) by using scheduling information in the RAR (S105), and perform a contention resolution procedure including reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (S108), which is a general DL and UL signal transmission procedure. Particularly, the UE receives Downlink Control Information (DCI) on a PDCCH. Control information transmitted from a UE to an eNB is collectively referred to as uplink control information (UCI). The UCI includes a hybrid automatic repeat and request acknowledgement/negative-acknowledgment (HARQ ACK/-NACK), a scheduling request (SR), channel state information (CSI), and so on. The CSI includes a channel quality indicator (CQI), a precoding matrix indicator (PMI), a rank indication (RI), and so on. Although the UCI is generally transmitted through a PUCCH, it may be transmitted through a PUSCH, when control information and traffic data should be transmitted simultaneously. In addition, the UCI may be transmitted aperiodically through a PUSCH by a request/indication of the network.

FIG. 2 illustrates the structure of a radio frame. The radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| $u$ | $N^{slot}_{symb}$ | $N^{frame,u}_{slot}$ | $N^{subframe,u}_{slot}$ |
|-----|-----|-----|-----|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the ECP case.

[Table 2]

| $u$ | $N^{slot}_{symb}$ | $N^{frame,u}_{slot}$ | $N^{subframe,u}_{slot}$ |
|-----|-----|-----|-----|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

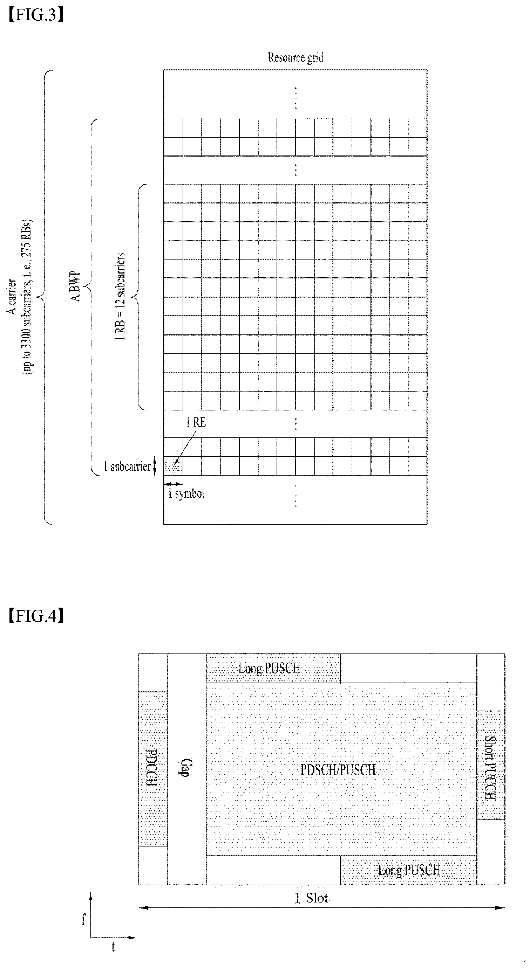

FIG. 3 illustrates an exemplary resource grid for the duration of a slot. A slot inlcudes a plurality of symbols in the time domain. For example, one slot inlcudes 14 symbols in a normal CP case, whereas one slot inlcudes 12 symbols in an extended CP case. A carrier includes a plurality of subcariers in the frequency domain. A resource block (RB) is defined as a plurality of (e.g., 12) contiguous subcarriers in the frequency domain. A bandwidth part (BWP) may be defined as a plurality of physical RBs (PRBs) in the frequency domain, and correspond to one numerology (e.g., an SCS, a CP length, or the like). A carrier may include up to N (e.g., 5) BWPs. Data communication may be performed in an active BWP, and only one BWP may be activated for one UE. Each element of a resource grid may be referred to as a resource element (RE) and mapped to one complex symbol.

FIG. 4 illustrates an example of mapping physical channels in a slot. A PDCCH may be transmitted in a DL control region, and a PDSCH may be transmitted in a DL data region. A PUCCH may be transmitted in a UL control region, and a PUSCH may be transmitted in a UL data region. A GP provides a time gap for switching from a transmisison mode to a reception mode or switching from the reception mode to the transmisison mode at the BS and the UE. Some symbols at a DL-to-UL switching time point within a subcrame may be configured as a GP.

Each physical channel is described below in more detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to an aggregation level (AL). A CCE is a logical allocation unit used to provide a PDCCH with a specific code rate according to a wireless channel state. A CCE includes six resource element groups (REGs). An REG is defined as one OFDM symbol and one (P)RB. The PDCCH is transmitted in a control resource set (CORESET). A CORESET is defined as an REG set having a given numerology (e.g., an SCS, a CP length, and so on). A plurality of CORESETs for one UE may overlap with each other in the time/frequency domain. The CORESET may be configured by system information (e.g., a master information block (MIB)) or UE-specific higher layer (e.g., radio resource control (RRC) layer) signaling. Specifically, the number of RBs and the number (up to 3) of OFDM symbols included in the CORESET may be configured by higher layer signaling.

For PDCCH reception/detection, the UE monitors PDCCH candidates. A PDCCH candidate represents CCE(s) that the UE should monitor for PDCCH detection. Each PDCCH candidate is defined as 1, 2, 4, 8, or 16 CCEs according to an AL. The monitoring includes (blind) decoding of the PDCCH candidates. A set of PDCCH candidates that the UE monitors are defined as a PDCCH search space (SS). The SS includes a common search space (CSS) or a UE-specific search space (USS). The UE may acquire DCI by monitoring PDCCH candidates in one or more SSs configured by an MIB or higher layer signaling. Each CORESET is associated with one or more SSs, and each SS is associated with one COREST. The SS may be defined based on the following parameters.

- controlResourceSetId: Indicates a CORESET associated with the SS
- monitoringSlotPeriodicity AndOffset: Indicates a PDCCH monitoring periodicity (in slots) and a PDCCH monitoring period offset (in slots)
- monitoringSymbolsWithinSlot: Indicates PDCCH monitoring symbols (e.g., the first symbol(s) of the CORESET) within the slot
- nrofCandidates: AL={1, 2, 4, 8, 16} indicates the number of PDCCH candidates (one of 0, 1, 2, 3, 4, 5, 6, and 8)

\* An occasion (e.g., time/frequency resources) in which the PDCCH candidates are to be monitored is defined as a PDCCH (monitoring) occasion. One or more PDCCH (monitoring) occasions may be configured within a slot.

Table 3 illustrates characteristics of each SS type.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 - | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., dynamic SFI) to the UE, and DCI format 2_1 may be used to deliver DL pre-emption information to the UE. DCI format 2_0 and/or DCI format 2_1 may be transmitted to UEs within a group through a group common PDCCH, which is a PDCCH delivered to UEs defined as a group.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH carries DL data (e.g., a DL-SCH transport block (DL-SCH TB)), and modulation schemes such as quadrature phase shift keying (QPSK), 16 quadrature amplitude modulation (16 QAM), 64 QAM, 256 QAM, or the like is applied to the PDSCH. A TB is encoded to generate a codeword. The PDSCH may carry up to two codewords. Each codeword may be subject to scrambling and modulation mapping, and modulation symbols generated from the codeword may be mapped to one or more layers. Each layer is mapped to resources along with a demodulation reference signal (DMRS)), generated as an OFDM symbol signal, and transmitted through a corresponding antenna port.

The PUCCH carries UCI. The UCI includes the following.

-    SR (Scheduling Request): Information used to request UL-SCH resources

- HARQ(Hybrid Automatic Repeat reQuest)-ACK(Acknowledgement): A response to a DL data packet (e.g., codeword) on a PDSCH. This indicates whether the DL data packet has been successfully received. One HARQ-ACK bit may be transmitted in response to a single codeword, and two HARQ-ACK bits may be transmitted in response to two codewords. The HARQ-ACK response includes a positive ACK (simply, ACK), a negative ACK (NACK), DTX, or NACK/DTX. HARQ-ACK is used interchangeably with HARQ ACK/NACK and ACK/NACK.
- CSI (Channel State Information): Feedback information for a DL channel. Multiple input multiple output (MIMO)-related feedback information includes an RI and a PMI.

Table 5 illustrates an example of PUCCH formats. Depending on PUCCH transmission durations, they may be classified into short PUCCH (Formats 0 and 2) and long PUCCH (Formats 1, 3 and 4).

[Table 5]

| PUCC H format | Length in OFDM symbols NPUCCHsymb | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 carries UCI of up to 2 bits, and is mapped to and transmitted based on a sequence. Specifically, the UE transmits one of a plurality of sequences through a PUCCH of PUCCH format 0 to transmit specific UCI to the BS. The UE transmits the PUCCH of PUCCH format 0 in PUCCH resources for a corresponding SR configuration, only when transmitting a positive SR.

PUCCH format 1 carries UCI of up to 2 bits, and modulation symbols are spread with an orthogonal cover code (OCC) (which is configured differently depending on whether frequency hopping is performed) in the time domain. A DMRS is transmitted in a symbol which does not carry modulation symbols (i.e., transmitted in time division multiplexing (TDM)).

PUCCH format 2 carries UCI of more than two bits, and modulation symbols are transmitted with a DMRS in frequency division multiplexing (FDM). The DMRS is located in symbol indexes #1, #4, #7 and #10 within a given RB with a density of 1/3. A pseudo noise (PN) sequence is used for a DMRS sequence. Frequency hopping may be activated for 2-symbol PUCCH format 2.

In PUCCH format 3, UEs are not multiplexed within the same PRB, and UCI with more than two bits is delivered. In other words, PUCCH resources of PUCCH format 3 do not include an OCC. A modulation symbol is transmitted with a DMRS in TDM.

PUCCH format 4 supports multiplexing of up to four UEs within the same physical RS and carries UCI with more than two bits. In other words, PUCCH resources of PUCCH format 3 include an OCC. A modulation symbol is transmitted with a DMRS in TDM.

At least one of one or more cells configured for the UE may be configured for PUCCH transmission. At least a primary cell may be configured as a cell for the PUCCH transmission. At least one PUCCH cell group may be configured for the UE based on the at least one cell configured for the PUCCH transmission, and each PUCCH cell group includes one or more cells. A PUCCH cell group may be simply referred to as a PUCCH group. The PUCCH transmission may be configured not only for the primary cell but also for an SCell, and the primary cell belongs to a primary PUCCH group, while the PUCCH-SCell configured for the PUCCH transmission belongs to a secondary PUCCH group. A PUCCH on the primary cell may be used for cells belonging to the primary PUCCH group, and a PUCCH on the PUCCH-SCell may be used for cells belonging to the secondary PUCCH group.

The PUSCH carries UL data (e.g., a UL-SCH TB) and/or UCI, and is transmitted based on a cyclic prefix-orthogonal frequency division multiplexing (CP-OFDM) waveform or a discrete Fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when transform precoding is impossible (e.g., transform precoding is disabled), the UE may transmit the PUSCH based on the CP-OFDM waveform, and when transform precoding is possible (e.g., transform precoding is enabled), the UE may transmit the PUSCH based on the CP-OFDM waveform or the DFT-s-OFDM waveform. PUSCH transmission may be dynamically scheduled by a UL grant in DCI or semi-statically scheduled based on higher layer (e.g. RRC) signaling (and/or layer 1 (L1) signaling (e.g. a PDCCH)). PUSCH transmission may be performed in a codebook-based or non-codebook-based manner.

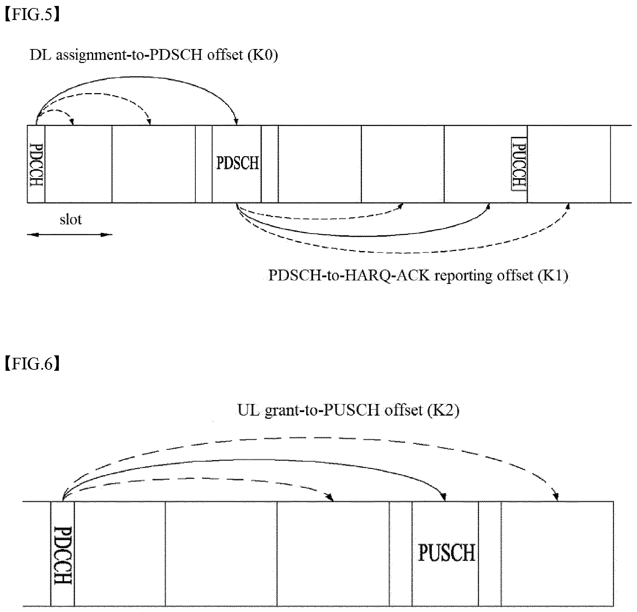

FIG. 5 illustrates an ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.

- Frequency domain resource assignment: Indicates an RB set assigned to a PDSCH.
- Time domain resource assignment: Indicates K0 (e.g., a slot offset), the starting position (e.g., OFDM symbol index) of a PDSCH in slot #n+K0, and the length (e.g., the number of OFDM symbols) of the PDSCH
- PDSCH-to-HARQ_feedback timing indicator: Indicates K1.
- HARQ process number (4 bits): Indicates HARQ process identify (ID) for data (e.g. PDSCH or TB)
- PUCCH resource indicator (PRI): Indicates a PUCCH resource to be used for UCI transmission among a plurality of PUCCH resources in a PUCCH resource set

Subsequently, the UE may receive a PDSCH from slot #(n+K0) according to scheduling information in slot #n. Upon completion of the PDSCH reception in slot #n1 (where $n+K0 \leq n1$), the UE may transmit UCI through a PUCCH in slot #(n1+K1). The UCI may include a HARQ-ACK response to the PDSCH. In FIG. 5, it is assumed for convenience that an SCS for the PDSCH and an SCS for the PUCCH are the same and slot# n1 = slot# n+K0, to which the disclosure is not limited. When the SCSs are different, K1 may be indicated/interpreted based on the SCS of the PUCCH.

When the PDSCH is configured to transmit up to one TB, the HARQ-ACK response may include one bit. When the PDSCH is configured to transmit up to two TBs, the HARQ-ACK response may include two bits in the case of not configuring spatial bundling, and include one bit in the case of configuring spatial bundling. When a HARQ-ACK transmission time for a plurality of PDSCHs is specified as slot #(n+K1), the UCI transmitted in slot #(n+K1) includes HARQ-ACK responses for the plurality of PDSCHs.

Whether the UE should perform spatial bundling for a HARQ-ACK response may be configured (e.g., by RRC/higher layer signaling) for each cell group. For example, spatial bundling may be individually configured for each HARQ-ACK response transmitted through a PUCCH and/or each HARQ-ACK response transmitted through a PUSCH.

When the maximum number of TBs (or codewords) receivable at one time (or schedulable by one DCI) in a corresponding serving cell is 2 (or larger) (e.g., when a higher layer parameter maxNrofCodeWordsScheduledByDCI corresponds to 2 TBs), spatial bundling may be supported. Meanwhile, more than 4 layers may be used for 2-TB transmission, and up to 4 layers may be used for 1-TB transmission. Consequently, when spatial bundling is configured for a corresponding cell group, spatial bundling may be performed for a serving cell for which more than 4 layers are schedulable among the serving cells of the cell group. On the serving cell, the UE that wants to transmit a HARQ-ACK response through spatial bundling may generate the HARQ-ACK response by performing a bitwise logical AND operation on A/N bits for a plurality of TBs.

For example, on the assumption that the UE receives DCI scheduling two TBs and receives the two TBs through a PDSCH based on the DCI, the UE performing spatial bundling may generate a single A/N bit by performing a logical AND operation on a first A/N bit for a first TB and a second A/N bit for a second TB. As a result, when both the first TB and the second TB are ACKs, the UE reports an ACK bit value to the BS, and when any one of the TBs is a NACK, the UE reports a NACK bit value to the BS.

For example, when only one TB is actually scheduled in a serving cell configured to receive two TBs, the UE may generate a single A/N bit by performing a logical AND operation on an A/N bit for the one TB and a bit value of 1. As a result, the UE reports the A/N bit for the one TB to the BS as it is.

There are a plurality of parallel DL HARQ processes for DL transmission in the BS/UE. The plurality of parallel HARQ processes allow DL transmission to be performed continuously while the BS waits for a HARQ feedback to successful or unsuccessful reception of a previous DL transmission. Each HARQ process is associated with a HARQ buffer of a medium access control (MAC) layer. Each DL HARQ process manages state variables such as the number of transmissions of a MAC physical data block (PDU) in a buffer, a HARQ feedback for the MAC PDU in the buffer, and a current redundancy version. Each HARQ process is identified by a HARQ process ID.

FIG. 6 illustrates an exemplary PUSCH transmission process. Referring to FIG. 6, the UE may detect a PDCCH in slot #n. The PDCCH may include UL scheduling information (e.g., DCI format 0_0 or DCI format 0_1). DCI format 0_0 and DCI format 0_1 may include the following information.

- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

In the NR system, a CSI-RS (channel state information-reference signal) is used for time and/or frequency tracking, CSI computation, L1(layer 1)-RSRP (reference signal received power) computation, and mobility. Here, the CSI computation is related to CSI acquisition, and the L1-RSRP computation is related to beam management (BM).

CSI (channel state information) collectively refers to information that may indicate the quality of a radio channel (or link) formed between a UE and an antenna port.

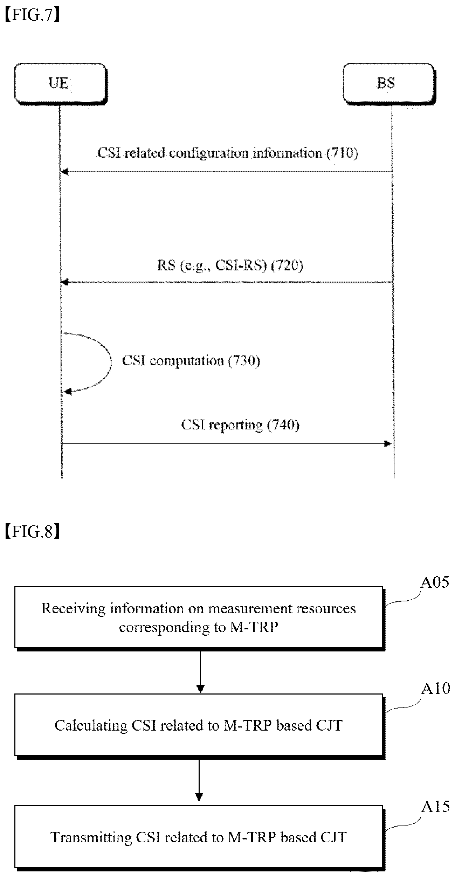

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

    (i) Feedback types may include CQI (channel quality indicator), PMI (precoding matrix indicator), CRI (CSI-RS resource indicator), SSBRI (SS/PBCH block resource indicator), LI (layer indicator), RI (rank indicator), L1-RSRP and/or L-SINR, and the like.

(ii) A measurement resource may include a configuration for a downlink signal and/or a downlink resource to be measured by a UE to determine feedback information. The measurement resource may be configured as a ZP and/or NZP-CSI-RS resources set associated with CSI reporting configuration. The NZP-CSI-RS resource set may include a CSI-RS set or an SSB set. For example, L1-RSRP may be measured for the CSI-RS set or may be measured for the SSB set.

(iii) A report type may include a configuration for a timing point at which a UE performs a report, an uplink channel, and the like. The report timing point may be configured periodically, semi-permanently, or aperiodically. A periodic CSI report may be transmitted on PUCCH. The semi-permanent CSI report may be transmitted on PUCCH or PUSCH, based on a MAC CE that indicates activation/deactivation. The aperiodic CSI report may be indicated by DCI signaling. For example, a CSI request field of an uplink grant may indicate one of various report trigger sizes. The aperiodic CSI report may be transmitted on PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

QCL (quasi-co location)

When the channel properties of an antenna port may be derived from a channel of another antenna port, the two antenna ports are quasi co-located. The channel properties may include one or more of delay spread, Doppler spread, frequency/Doppler shift, average received power, received timing/average delay, and spatial RX parameter.

The UE may be configured with a list of a plurality of TCI-State configurations through a higher layer parameter, PDSCH-Config. Each TCI-State is associated with a QCL configuration parameter between one or two DL RSs and a DMRS port of a PDSCH. QCL may include qcl-Type1 for a first DS RS and qcl-Type2 for a second DL RS. A QCL type may correspond to one of the following types.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Beam Management (BM)

BM is a series of processes for acquiring and maintaining a set of BS (or transmission and reception point (TRP)) beams and/or UE beams available for DL and UL transmissions/receptions. BM may include the following processes and terminology.

- Beam measurement: The BS or the UE measures the characteristics of a received beamformed signal.
- Beam determination: The BS or the UE selects its transmission (Tx) beam/reception (Rx) beam.
- Beam sweeping: A spatial domain is covered by using Tx beams and/or Rx beams in a predetermined manner during a predetermined time interval.

- Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

The DL BM process may include (1) transmission of a beamformed DL RS (e.g., a CSI-RS or SSB) from the BS, and (2) beam reporting from the UE.

The beam report may include preferred DL RS ID(s) and reference signal received power (RSRP) corresponding to the DL RS ID(s). A DL RS ID may be an SSB resource indicator (SSBRI) or a CSI-RS resource indicator (CRI).

M-TRP (multi-transmission and reception point) transmission

NR Release 17 supports M-TRP PDCCH repeated transmission, M-TRP PDCCH/PDSCH SFN transmission, S-DCI-based M-TRP PUSCH repeated transmission, and single PUCCH resource-based M-TRP PUCCH repeated transmission.

In all of these transmission techniques, the same content (i.e., DCI, a UL TB, or UCI) is repeatedly transmitted with URLLC target enhancement for increased reliability. Repeated transmissions are performed in TDM or FDM in the case of M-TRP PDCCH repeated transmission, repeated transmissions are performed in the same time/frequency/layer in the case of M-TRP PDCCH/PDSCH SFN transmission, repeated transmissions are performed in TDM in the case of S-DCI-based M-TRP PUSCH repeated transmission, and repeated transmissions are performed in TDM in the case of single PUCCH resource-based M-TRP PUCCH repeated transmission.

- S-DCI-based M-TRP PDCCH repeated transmission

In NR Release 17, for M-TRP PDCCH repeated transmission, a plurality of CORESETs configured with different TCI states (i.e., different QCL RSs) are configured for the UE, and a plurality of SS sets connected to the CORESETs, respectively are configured. The BS indicates/configures linkage between an SS set connected to one CORESET and an SS set connected to another CORESET, for repeated transmission, to/for the UE, so that the UE may be aware that PDCCH candidates of the SS sets are repeatedly transmitted.

For example, two CORESETs, CORESET #0 and CORESET #1 may be configured for the UE and connected to SS sets #0 and #1, respectively, and SS set #0 and SS set #1 may be linked. The UE may be aware that the same DCI is repeatedly transmitted on a PDCCH candidate of SS set #0 and a PDCCH candidate of SS set #1, and through a specific rule, that the specific PDCCH candidate of SS set #0 and the specific PDCCH candidate of SS set #1 are a pair configured for repeated transmission of the same DCI. These two PDCCH candidates are referred to as linked PDCCH candidates, and when the UE successfully receives either of the two PDCCH candidates, the UE may successfully decode the DCI. However, when receiving the PDCCH candidate of SS set #0, the UE uses a QCL RS (i.e., DL beam) of the TCI state of CORESET #0 connected to SS set #0, and when receiving the PDCCH candidate of SS set #1, it uses a QCL RS (i.e., DL beam) of the TCI state of CORESET #1 connected to SS set #1, so that the UE receives the linked PDCCH candidates with different beams.

- M-TRP SFN PDCCH

As a special case of M-TRP PDCCH repeated transmission, multiple TRPs may repeatedly transmit the same DCI through the same time/frequency/DM-RS port, which may be called SFN PDCCH transmission. However, for SFN PDCCH transmission, the BS configures a plurality of TCI states for one CORESET rather than a plurality of CORESETs with different TCI states. When the UE receives a PDCCH candidate in an SS set connected to the one CORESET, it performs channel estimation on a PDCCH DM-RS and attempts to decode the PDCCH DM-RS using all of the plurality of TCI states.

- M-TRP SFN PDSCH

In the above M-TRP PDSCH repeated transmission, the two TRPs repeatedly transmit the corresponding channel in different resources. In a special case, however, when the two TRPs use the same resource, that is, even when the same channel is repeatedly transmitted in the same frequency, time, and layer (or DM-RS port), the reliability of the channel may be improved. In this case, the same channels that are repeatedly transmitted are combined on the air and received because their resources are not distinguished. Therefore, they are recognized as one channel from the receiver's perspective. In the NR standard, for PDSCH SFN transmission, two DL TCI states may be configured for PDSCH DM-RS reception.

- S-DCI-based M-TRP PUSCH repeated transmission

For S-DCI-based M-TRP PUSCH transmission, the BS configures two SRS sets for the UE, and the SRS sets are used to indicate UL transmission ports and UL beam/QCL information for TRP #1 and TRP #2, respectively. In addition, the BS may indicate SRS resources for the respective SRS sets by two SRI fields in one DCI, and indicate up to two power control (PC) parameter sets. For example, a first SRI field may indicate SRS resources and a PC parameter set defined for set 0, and a second SRI field may indicate SRS resources and a PC parameter set defined for set 1.

The UE receives the indication of a UL Tx port, a PC parameter set, and UL beam/QCL information for TRP #1 through the first SRI field, and performs PUSCH transmission in a TO corresponding to SRS set #0. Similarly, the UE receives the indication of a UL Tx port, a PC parameter set, and UL beam/QCL information for TRP #2 through the second SRI field, and performs PUSCH transmission in a TO corresponding to SRS set #1.

- M-TRP PUCCH repeated transmission based on single PUCCH resource

For M-TRP PUCCH transmission based on a single PUCCH resource, the BS activates/configures two spatial relation infos for the single PUCCH resource, for the UE, and when the UE transmits UCI in the PUCCH resource, the spatial relation infos are used to indicate spatial relation information for TRP #1 and TRP #2, respectively.

For example, the UE receives an indication of a Tx beam/PC parameter for TRP #1 through a value indicated by a first spatial relation info, and performs PUCCH transmission in a TO corresponding to TRP #1 using this information. Similarly, the UE receives an indication of a Tx beam/PC parameter for TRP #2 through a value indicated by a second spatial relation info, and performs PUCCH transmission in a TO corresponding to TRP #2 using this information.

In the Rel 17 standardization meeting, a configuration method was enhanced so that two spatial relation infos may be configured for a PUCCH resource, for M-TRP PUCCH repeated transmission. That is, when a PC parameter is set in each spatial relation info, a spatial relation RS may be configured. As a result, PC information and spatial relation RS information corresponding to two TRPs may be configured through the two spatial relation infos, and the UE transmits UCI in TO 1 through a PUCCH using the first spatial relation info, and transmits the same UCI (i.e., CSI, ACKNAK, SR) in TO 2 through the PUCCH using the second spatial relation info.

Hereinafter, a PUCCH resource configured with two spatial relation infos is referred to as an M-TRP PUCCH resource, and a PUCCH resource configured with one spatial relation info is referred to as an S-TRP PUCCH resource.

Meaning of TCI state/beam indication

Using or mapping a specific TCI state (or TCI) when data/DCI/UCI is received in a certain frequency/time/spatial resource may mean that in DL, a channel is estimated from a DM-RS in the frequency/time/spatial resource, using a QCL type and QCL RS indicated by the DL TCI state, and data/DCI is received/demodulated based on the estimated channel.

In UL, it may mean that a DM-RS and data/UCI are transmitted/modulated in the frequency/time/spatial resource using a Tx beam and/or Tx power indicated by the UL TCI state.

A UL TCI state includes information about a Tx beam or Tx power for the UE, and the information may be configured for the UE by other parameters such as a spatial relation info, instead of the TCI state.

The UL TCI state may be directly indicated by DCI carrying a UL grant, or may mean a spatial relation info for an SRS resource indicated by an SRI field in the UL grant DCI. Alternatively, it may mean an open-loop Tx power control parameter linked to the value indicated by the SRI field in the UL grant DCI. Alternatively, a UL TCI may be indicated by the DL grant DCI.

<M-TRP related description - Common layer NCJT>

In 3GPP NR Release 17 standard, a discussion is underway on an SFN transmission method in which M-TRP transmits the same data through the same layer and the same DM-RS port together for the same time/frequency region. For example, in a one-layer M-TRP SFN transmission, TRP 1 and TRP 2 transmit the same data to a UE using the same DM-RS port and the same time/frequency resource. In this case, DL QCL beam information for DM-RS (i.e., QCL reference RS defined in a TCI state) is configured for each TRP, and thus the DM-RS port receives both configurations of QCL beam information for TRP 1 and QCL beam information for TRP 2.

Since the same data transmitted by the two TRPs is received through one DM-RS port, a channel estimated through the DM-RS port becomes a synthetic channel in which a downlink channel of TRP 1 and a downlink channel of TRP 2 are combined, and the synthetic channel appears randomly as a constructive or destructive sum because channel phases of the TRPs are not aligned with each other. From this point of view, SFN transmission may be said to be a type of M-TRP NCJT. In addition, since M-TRP transmits a common layer, it is called a common layer NCJT.

<M-TRP NCJT - Independent layer NCJT)>

Meanwhile, two TRPs transmit different data using different layers and different DM-RS ports, respectively. For example, as DM-RS ports belonging to different CDM groups are grouped, DM-RS ports belonging to a first CDM group are received using a first QCL beam information (i.e., a first TCI state indicated) and DM-RS ports belonging to a second CDM group are received using a second QCL beam information (i.e., a second TCI state indicated). Thus, since layers/DM-RS ports transmitted by the two TRPs are separated from each other and data is not transmitted/received through a synthesis channel, there is no need to align channel phases of the two TRPs. This is referred to as non-coherent JT. In addition, since each TRP transmits an independent layer, it is also referred to as an independent layer NCJT.

<M-TRP CJT>

Similar to M-TRP SFN, M-TRP CJT allows M-TRP to transmit the same data through the same layer and the same DM-RS port together for the same time/frequency region. However, unlike M-TRP SFN, since M-TRP CJT does not have channel phases of TRPs aligned with each other, as two channels becomes a constructive sum ideally to make a synthetic channel, a higher SNR gain through beamforming than SFN is obtained as a result. A UE may add a phase difference between two TRP channels to an existing CSI to feedback so that channel phases of TRPs can be aligned together. In addition, when data is transmitted on multiple layers, some layers may be CJT-transmitted but some layers may support a case of transmission of only one TRP. For example, when rank-2 PDSCH transmission is performed, as TRP 1 and TRP 2 perform CJT, both TRPs transmit the same data on a first layer. Yet, only TRP 1 may transmit data on a second layer.

For CSI feedback for CJT transmission (i.e., CSI with a common phase (co-phase) for a downlink channel of each TRP), a Base Station (BS) may configure CMR and CSI contents to a UE in a following method to measure channels of two TRPs.

In a first method, one CSI-RS is configured as CMR, but some ports of the CSI-RS may be transmitted by TRP 1 and the rest may be transmitted by TRP 2. When this method is used, QCL beam (or QCL reference RS defined in the TCI state or the TCI state) information for TRP 1 is configured for some ports of the CSI-RS and QCL beam (or QCL reference RS defined in the TCI state or TCI state) information for TRP 2 is configured for other ports. A UE measures the channel with the corresponding CMR to estimate the channel for transmission antenna ports amounting to [the number of ports of TRP 1 + the number of ports of TRP 2], and then computes PMI for the ports amounting to [the number of ports of TRP 1 + the number of ports of TRP 2). The computed PMI reflects an optimal common phase between the port of TRP 1 and the port of TRP 2 and feeds a computed RI/PMI/CQI back to a base station.

In a second method, two CMRs are configured, CMR 1 configures CSI-RS 1 transmitted by TRP 1, and CMR 2 configures CSI-RS 2 transmitted by TRP 2. A UE may estimate a channel of TRP 1 and a channel of TRP 2 respectively by measuring channels with the corresponding CMR, and generates an entire channel of TRP 1 and TRP 2 by concatenating the estimated channels. For example, a 2-port channel of TRP 1 is estimated with CMR1, a 2-port channel of TRP 2 is estimated with CMR2, and then a 4-port channel is generated by concatenating them. RI/PMI/CQI is computed for the generated channel and fed back to a base station.

In a third method, two CMRs are configured in the same manner as the second method in the third method. Unlike the second method, A UE does not concatenate channels measured with the corresponding CMRs. RI1/PMI1 is computed from a channel of CMR 1, RI2/PMI2 is computed from a channel of CMR 2, and a common phase between the respective channels is computed. In addition, CQI that may be achieved during CJT PDSCH transmission is computed by applying RI1/RI2/PMI2/common phase/common amplitude (co-amplitude) and all of them are fed back.

A method of determining the number of CPUs for CJT CSI

According to the existing NR standard, one CSI-RS resource used for channel measurement occupies one CPU. Hereinafter, when CMR(s) corresponding to M-TRP are configured for a UE to compute CJT CSI, a method for determining the number of CPUs of the corresponding CSI is proposed.

For example, a base station configures M CMRs (each CMR is configured as one NZP CSI-RS resource) corresponding to M TRPs to a UE. Then, the UE selects N (0<N<=M) CMRs to report CJT CSI with the corresponding CMRs and reports N and the selected N CMRs together. In this case, the UE may select one of $\sum_{i=1,2,...,M}^{M} C_i^M$ CMR combinations. Here, $C_i^M$ is the number of cases in which i CMRs may be selected irrespective of order in M CMRs.

In this case, the number of CPUs for CJT CSI is determined by one of the following methods.

1) CPU number determining method 1 - $$CPU\ Number = \sum_{i=1,2,...,M}^{M}\left(i * C_i^M\right)$$

When CJT is computed using the given N CMRs, N channel measurements are performed and one CJT CSI is computed using the measured channel, and thus N CPUs are used for this purpose. Since the number of combinations capable of selecting N CMRs from M CMRs is $C_N^M$, $N * C_N^M$ CPUs are used for the given N. Since a UE has to select N from values between 1 and M, a total $[1 * C_1^M + 2 * C_2^M + \ldots + M * C_M^M]$ CPUs are used.

The number of combinations in which N CMRs may be selected from M CMRs is $C_N^M$, and thus CPUs may be excessively increased. In order to solve this problem, a base station may limit the number of combinations capable of selecting N CMRs from M CMRs or it may be defined that only some combination may be selected according to a specific rule. For example, if N CMRs are selected in order from a first CMR, since there is one combination capable of selecting N CMRs from M CMRs, ($i * C_i^M$) is substituted with i*1 in the above equation.

2) CPU number determining method 2 - $\mathrm{CPU\ Number} = \sum_{i=1,2,\ldots,M}^{M}(C_i^M)$

When CJT is computed using the given N CMRs, N channel measurements are performed, but a UE generates one channel by concatenating/aggregating N measured channels and computes one RI/PMI/CQI for this one channel. When RI/PMI/CQI is computed separately for each of N channels, N CPUs will be used as shown in the CPU number determining method 1, but in the case of a CPU number determining method 2, one RI/PMI/CQI is computed for one aggregated channel, so when CJT is computed using the given N CMRs, one CPU is used.

Since the number of combinations capable of selecting N CMRs from M CMRs is $C_N^M$, $1 * C_N^M$ CPUs are used for the given N. Since a UE has to select N from values between 1 and M, a total $[C_1^M + C_2^M + \ldots + C_M^M]$ CPUs are used.

The number of combinations capable of selecting N CMRs from M CMRs is $C_N^M$, and thus, CPUs may be excessively increased. To solve this problem, the number of combinations capable of selecting N CMRs M CMRs may be limited by a base station, or only some combinations may be limited to be selectable by a specific rule. For example, when N CMRs are selected in order from a first CMR, ($C_i^M$) is replaced by 1 in the above equation because there is one combination capable of selecting N CMRs from M CMRs.

3) CPU number determining method 3 - CPU Number = M + *N*

First, a UE selects N CMR combinations by measuring L1-RSRP (or L1-SINR) for each of M CMRs. For example, if L1-RSRPs for M=4 and CMR 0 to CMR 3 are 10 dB, 11 dB, 12 dB, 0 dB, respectively, the UE selects CMR 0, CMR 1, and CMR 2 whose RSRP is not too low (e.g., above a specific threshold) or is not too lower than 12 dB that is the maximum RSRP. M CPUs are used in this process.

Thereafter, CJT CSI is computed for the selected N CMR combinations, and N CPUs are used in this process. However, since a base station does not know N until the N selected by the UE is reported, assuming N=M or the largest value among available Ns (i.e., assuming the most worst case having the highest complexity), it is promised that M or up to N CPUs are used.

If N is set to a specific value, such an assumption is not necessary, so N CPUs are used. In this case, [M+N] CPUs are used instead of [M+M] CPUs.

4) CPU number determining method 4 - CPU Number = M + 1

First, a UE selects N CMR combinations by measuring L1-RSRP (/L1-SINR) for each of M CMRs. For example, if L1-RSRPs are 10 dB, 11 dB, 12 dB, and 0 dB for M = 4, CMR 0, CMR 1, CMR 2, and CMR 3, respectively, the UE selects CMR 0, CMR 1, and CMR 2 whose RSRP is not too low (e.g., above a specific threshold) or is not too low than the maximum RSRP of 12. M CPUs are used in this process.

Thereafter, CJT CSI is computed for the selected N CMR combinations, and one CPU is used in this process. Specifically, the UE generates one channel by concatenating/aggregating N measured channels and computes one RI/PMI/CQI for the one channel.

In the case where RI/PMI/CQI is computed separately for each of the N channels as in the CPU number determining method 3, N CPUs will be used, but in the case of the CPU number determining method 4, one CPU is used because one RI/PMI/CQI is computed for one aggregated channel.

5) CPU number determining method 5 - $\text{CPU Number} = O + N * C_N^M$

First, a UE determines N, which means the number of TRPs participating in CJT. In this process, O CPUs (e.g., O=1 or O=M) are used. Thereafter, with respect to the determined N, $C_N^M$ CMR combinations exist, and CJT CSI is computed using N CPUs per CMR combination. Accordingly, $N * C_N^M$ CPUs are used in this process. However, since a base station may not know N until the N selected by the UE is reported, $N * C_N^M$ is computed using the N that enables $C_N^M$ to have the largest value.

Alternatively, CJT CSI may be computed using one CPU for each CMR combination, and in this case, $C_N^M$ CPUs are used instead of $N * C_N^M$ CPUs, and thus the total number of CPUs becomes $O + C_N^M$. However, since the base station does not know N until the N selected by the UE is reported, $C_N^M$ is computed using N that enables $C_N^M$ to have the largest value.

6) CPU number determining method 6 - CPU Number = O + N

First, a UE selects N CMR combinations by measuring L1-RSRP (or L1-SINR) for each of M CMRs. For example, if L1-RSRPs are 10 dB, 11 dB, 12 dB, 0 and dB for M=4, CMR 0, CMR 1, CMR 2, and CMR 3, respectively, the UE selects CMR 0, CMR 1, and CMR 2 whose RSRP is not too low (e.g., above a specific threshold) or not too lower than the maximum RSRP of 12 dB. In this process, O (e.g. O=1 or O=M) CPUs are used, and such a process is similar to a beam reporting process of reporting/computing L1-RSRP/SINR when multiple CMRs are given, so it may be assumed that O=1.

Thereafter, CJT CSI is computed for the selected N CMR combinations, and N CPUs are used in this process. However, since a base station does not know N until the N selected by the UE is reported, it is promised that M or up to N CPUs are used on the assumption of N=M or a largest value among available Ns (i.e., assuming assumed to be the a worst case of highest complexity).

If N is set to one specific value, such assumption is not necessary, so N CPUs are used.

Alternatively, CJT CSI may be computed using one CPU for the selected N CMR combinations. In this case, the number of CPUs is determined as [0 + 1].

In the CPU number determining methods 3 to 6, the number of CPUs uses A CPUs in the process of selecting N CMR combinations (or selecting N), and then uses B CPUs in the process of computing CSI for the given N CMR combinations (or the given N). However, if these two processes are sequentially performed, it is also possible to determine the number of CPUs as a maximum value among CPUs required for each of the two processes without adding the number of CPUs into A+B. That is, the CPU number is determined by max(A, B) instead of A+B.

In the above description, when the UE selects N CMRs (N NZP CSI-RS or N TRPs) out of M and computes CJT CSI, various methods have been proposed for how to count the number of CPUs depending on the implementation of the UE. Since the CPU number counting method may vary depending on the UE implementation, it is preferable for the UE to report the CPU number counting method to the base station as UE capability, and for the base station and the UE to count the number of CPUs in a common manner. In addition, as M increases with respect to the given N, the CJT CSI computation complexity increases, so the number of CPUs may be reported per M value.

In addition, as the UE computes CJT CSI by selecting N CMRs (N NZP CSI-RSs or N TRPs) out of M, UE's CSI computation complexity increases. So, more CPUs may be allocated to perform processing. Instead, the processing may be performed by extending Z and Z' values, which are the minimum times required to compute CSI, without increasing the number of the allocated CPUs (e.g., counting the number of CPUs as 1). In particular, Z means the time from a last symbol of PDCCH, on which DCI for triggering a CSI report is received, to a first symbol for reporting CSI, and Z' means the time from a last symbol of AP-CSI-RS used for channel measurement for an $n^{th}$ CSI report to a first symbol for reporting an $n^{th}$ CSI.

For example, as M increases for a given N, such complexity increases. Therefore, as M increases, Z and Z' values may be set to be larger. Alternatively, when M is greater than or equal to a specific value, Z and Z' values may be set to be further larger. For example, it may be increased by adding an alpha value to the existing Z and Z' values or by multiplying them by n times.

Alternatively, if K CPUs are computed to be used by the CPU number counting method, instead of actually using K CPUs, only one CPU may be used/allocated, and the Z and Z' values may be multiplied by K to increase the CSI processing time.

In order to configure M CMRs, a base station may configure M NZP CSI-RSs to a UE, and the UE may generate a downlink channel assuming a CJT by aggregating channels estimated from the corresponding M CSI-RSs. For example, if M CSI-RSs, each of which including k ports, are configured, the UE may estimate a downlink channel for M TRPs by assuming M*k port CSI-RSs. If N of the M are selected, a downlink channel for the corresponding N TRP may be estimated using N*k port CSI-RSs by aggregating only the corresponding N CSI-RSs.

Meanwhile, as the M value increases (i.e., as the number of NZP CSI-RSs of CMRs configured to compute CJT CSI increases), the number of CMR combinations that may be selected by a UE increases and the amount of CSI computation increases. Therefore, a method for determining the number of CPUs in a different manner according to the M value is proposed.

If the M value is smaller than or equal to a specific value C (e.g., C = 2 or configured by a base station to a UE), the number of CMR combinations is small, so the CPU number determining method 1 or 2 that uses more CPUs is used among the above proposed methods. Otherwise, as there are many CMR combinations, the CPU number determining methods 3 to 5 that use fewer CPUs, are used. Thus, an amount of CPUs for CJT CSI computation may be adjusted. This is just an example, and if there are a random CPU number determining method A using relatively more CPUs and a random CPU number determining method B using fewer CPUs, the CPU number determining method A is used in case of small M according to an M value. Otherwise, the CPU number determining method B may be used

Alternatively, when the M value is smaller than or equal to a specific value C (C = 2 or configured to a UE by a base station), the number of CPUs is computed through one of the CPU number determining methods 1 to 6 (or a random CPU number determining method). Yet, when the C value is exceeded, only CPUs amounting to the number of CPUs (when M=C) are allocated. Namely, in order to prevent CPUs from increasing excessively as the M value increases, an upper bound is set based on the CPU number corresponding to M=C. If this method is used, CPUs fewer than the actual number required for M>C, it is preferable that the UE simply performs CSI computation even though the accuracy is poor.

This method may also be applied to the determination of Z and Z', which are minimum times required for computing CSI. That is, by setting upper bounds of Z and Z' when M=C, it is preferable that Z and Z' are fixed to the set upper bounds even when M>C.

Meanwhile, CSI processing complexity increases as the sum of the number of M NZP CSI-RS ports increases as well as the M value. For example, even if four NZP CSI-RSs are configured, if each has two CSI-RS ports, a UE needs to compute an 8-port codebook based on channels corresponding to a total of 8 ports. On the other hand, even if two NZP CSI-RSs are configured, if each has 32 CSI-RS ports, the UE needs to compute a 64-port codebook based on channels corresponding to a total of 64 ports. Accordingly, a method for increasing the number of CPUs or increasing Z and Z' values according to the sum of the number of ports of M NZP CSI-RSs is proposed. That is, if the sum of the number of ports increases, the CPU number or the Z and Z' values are increased.

For example, when the sum of the number of ports of M NZP CSI-RSs is equal to or smaller than a constant C, only one CPU is used as in the past or the existing Z and Z' values are applied. Otherwise, the number of CPUs is increased or the Z and Z' values are increased. The constant C is set to 32, which is the maximum number of ports of a configurable NZP CSI-RS when using the existing Type II codebook. Alternatively, the constant C is indicated to the UE by the base station. Alternatively, the UE determines and reports the constant C to the base station. More precisely, increments of the CPU, Z and Z' values may be determined according to a range in which the sum of the number of ports is included.

Specifically, if the sum of the number of ports of the NZP CSI-RS exceeds the constant C and is smaller than or equal to 2C, the number of CPUs is further increased by 1 or the Z and Z' values are increased by alpha. If the sum of the number of ports of the NZP CSI-RS exceeds a constant P*C and is smaller than or equal to (P+1)*C, the number of CPUs is further increased by P or the Z and Z' values are increased by P*alpha.

As another method of increasing the values of Z and Z', increasing ((M-1) * C) to the existing Z and Z' may be considered. The constant C may be indicated by the base station to the UE or determined by the UE to be reported to the base station. In addition, the constant applied to Z and the constant applied to Z' may be different values, respectively.

A method of increasing the number of CPUs or Z and Z' values according to the sum of the number of ports of M NZP CSI-RSs may be used in combination with other methods of the present disclosure. For example, where the sum of the number of ports of M NZP CSI-RSs is equal to or smaller than C, CPU, Z and Z' values are used (i.e., without being increased), and the above-described various methods may be applied only when the sum of the number of ports of M NZP CSI-RSs exceeds C. That is, the above-proposed method (e.g., the CPU number determining method 1 to the CPU number determining method 6) is used only when the sum of the number of ports of M NZP CSI-RSs exceeds C.

In addition, when a CPU is insufficient for the CJT CSI computation or a processing time amounting to Z or Z' is not given, the UE may perform CSI computation and reporting by considering only a specific combination among M NZP CSI-RSs. For example, in this case, CSI is computed using a specific one of NZP CSI-RS (e.g., a first NZP CSI-RS) among M NZP CSI-RSs. That is, CSI that assumes S-TRP transmission for one TRP corresponding to the first NZP CSI-RS is fed back.

As another example, CSI is computed using all of M NZP CSI-RSs. That is, CSI assuming CJT transmission for M TRPs corresponding to M NZP CSI-RSs is fed back. Even if the base station indicates a TRP selection function to the UE so that the UE can select N combinations, if the above exception condition occurs, that is, if CPU is insufficient or a processing time amounting to Z or Z' is not given, an operation of computing CSI using all of M NZP CSI-RSs may be performed.

If CSI processing time/CPU is not sufficient, a method of computing/reporting CJT CSI using only a first NZP CSI-RS of M NZP CSI-RSs to an L$^{th}$ NZP CSI-RS that may be computed/reported within a remaining CSI processing time/CPU is proposed. For example, CJT CSI for M=4 should be reported, but if CSI processing time/CPU is insufficient, only CJT CSI for the first L NZP CSI-RSs that can be reported with the given CSI processing time/CPU is reported.

In the above description, when CJT is computed using the given N CMRs, two methods are proposed as follows.

First, N channel measurements are performed and one CJT CSI is computed using a measured channel. For this, N CPUs are used.

Second, one RI/PMI/CQI is computed for one aggregated channel, so one CPU is used.

In addition to the above two methods, a UE may report, through UE capability, how many CPUs will be used in case of computing CJT using N CMRs given. As a corresponding report value, one of values greater than or equal to 1 and smaller than or equal to N. Specifically, the UE may report X and accordingly, when counting the number of CPUs required to compute CJT using the given N CMRs in the above proposal, what is counted as N (e.g., the CPU number determining method 1, the CPU number determination method 3, the CPU number determining method 5, and the CPU number determining method 6) should be reported in a manner of being replaced by X or what is counted as one (e.g., the CPU number determining method 2, the CPU determination method 4, and the CPU number determining method 6) should be reported in a manner of being replaced by X.

That is, in order to prevent an excessive increase of CPUs as an M value increases, an upper bound U is set for the number of CPUs. That is, when the CPU number determined by one of the above-described CPU number determining methods is L, a final CPU number is determined as min(L, U), which is a smaller value of L and U. U may be reported as UE capability by the UE to the base station or may be set by the base station. Alternatively, when the UE reports the number of CPUs provided to itself through UE capability, the UE may use this value as U. For example, according to 3GPP TS 38.331 spec, since the following simultaneousCSI-ReportPerCC means the number of CPUs that may be used by a UE in a single Component Carrier (CC), this value may be set to U.

Similarly, in order to prevent Z and Z' from increasing excessively as the value of M increases, upper bounds U may be set for Z and Z'. That is, if Z and Z' are L symbols determined by the method proposed in the present disclosure, the final Z and Z' values are determined as min(L, U).

CPU occupation time

According to the current 3GPP NR standard, CPU is occupied until a first CSI report timing point of an SP-CSI report, and an AP (aperiodic)-CSI report occupies CPU from a DCI reception timing point to a CSI report timing point. On the other hand, in the rest of the CSI report (i.e., the rest of a CSI report of an SP (semi-persistent)-CSI report except a first CSI report thereof and a P (periodic)-CSI report), CPU is occupied from a start symbol of an earliest CMR/IMR resource of a latest CMR/IMR occasion located in a CSI reference resource slot or a corresponding previous slot to a CSI report timing point.

When M CMRs (i.e., M NZP CSI-RS resources for CMR) are configured for CJT CSI computation, CPU occupation starting times are determined for each NZP CSI-RS using the existing method for CPU occupation time determination of the rest CSI report and P-CSI report except for the first CSI report of the SP-CSI report, and then an earliest value among the computed M starting times is determined as the CPU occupation starting time for the corresponding CJT CSI. This is to use the CPU from the earliest occupation starting time among the occupation starting times computed based on each of the M CSI-RSs because CSI is computed using all of the M CSI-RSs unlike the previous one.

Reporting mode for CJT CSI

According to the current 3GPP NR Release 17 standard, a UE may report NCJT CSI for up to two TRPs, and for this purpose, there are reporting mode 0 and reporting mode 1. In reporting mode 0, the UE selects and reports the best one CSI of S-TRP CSI computed with one CMR and M-TRP CSI computed with a CMR pair. For example, if CMR 1 to CMR 4 are configured for S-TRP CSI and CMR (1,2) and CMR (3,4) are configured for M-TRP CSI, a best CSI of four S-TRP CSIs computed with CMR 1 to CMR 4 and two M-TRP CSIs computed with CMR (1,2) and CMR (3,4) is selected/reported. On the other hand, in reporting mode 1, one of M-TRP CSIs is selected and reported, and 0 to two of S-TRP CSIs are selected and reported. In addition, such a CSI selection is reported through CRI.

If it is possible to report NCJT or CJT CSI for three or more (e.g., N) TRPs in the future, a new reporting mode A and a new reporting mode B may be configured in consideration of the same. N denotes the number of CMRs configured for JT CSI computation.

In the new reporting mode A, a UE selects/reports a best CSI among JT CSIs using i CMRs, but reports it with respect to i = 2, 3... N. That is, a best CSI among JT CSIs for two CMRs is selected and reported, and a best CSI among JT CSIs for three CMRs is selected and reported. That is, the best selection from JT CSIs for N CMRs is reported. As a result, when 2 to N TRPs perform JT transmission, a best TRP combination and CSI are reported for each case. Instead of selecting/reporting one best CSI for each i, it may be configured to select/report L best CSIs.

Alternatively, in the new reporting mode B, a UE computes JT CSIs using i CMRs for i = 2, 3 ... N, and selects/reports a best CSI among them. As a result, it is reported which will be better for a prescribed number of TRPs to perform JT transmission. In addition, a best TRP combination and CSIs at that time are reported.

Table 6 below is an example of CSIs for a reporting mode A and a reporting mode B.

In Table 6, when N=4, possible CMR combinations are configured for the TRP numbers 2, 3, and 4.

Three CMR pairs, i.e., CMR (1,2), CMR (2,3), and CMR (3,4), are configured for two TRPs, three CMR groups, i.e., CMR (1,2,3) and CMR (2,3,4), are configured for three TRPs, and two CMR groups, CMR (1,2,3,4) and CMR (5,6,7,8) are configured for four TRPs.

In the reporting mode A, a UE reports CSI by selecting CMR (1,2) for 2 TRP JT, CSI by selecting CMR (2,3,4) for 3 TRP JT, and CSI by selecting CMR (5,6,7,8) for 4 TRP JT. On the other hand, in the reporting mode B, the UE selects/reports a best CSI for CMR (2,3,4) among all M-TRP CSIs.

[Table 6]

| Number of TRP | CMR Configuration | Reporting Mode A | Reporting Mode B |
|---|---|---|---|
| 2 | (1,2), (2,3), (3,4) | CSI for CMR (1,2) | |
| 3 | (1,2,3), (2,3,4) | CSI for CMR (2,3,4) | CSI for CMR (2,3,4) |
| 4 | (1,2,3,4), (5,6,7,8) | CSI for CMR (5,6,7,8) | |

In the above description, although it is assumed i = 2, 3... N, CMR may not be configured with respect to a specific value i. For example, a base station configures CMR (0,1) corresponding to i=2 and CMR (0,1,2,3) corresponding to i=4 to a UE, but may not configure a CMR combination corresponding to i=3. Alternatively, it may be configured such that the base station does not make a report for a specific i value (e.g., i=3). In this case, computation and reporting for i=3 are omitted in the above proposal.

In the new reporting mode, S-TRP CSI may be reported along with M-TRP CSI reporting, and the base station configures how many S-TRP CSIs will be reported in a manner similar to the existing method.

All CSIs assuming different TRP numbers are reported in the reporting mode A. In addition, a priority between the corresponding CSIs may be introduced. When uplink channel resources for reporting CSIs are insufficient using the priority, CSI omission may be performed or a CSI encoding order (i.e., CSI payloads are sequentially concatenated based on the priority) may be determined. For example, a CSI having a small or large M-TRP number (i.e., CMR number) may be prioritized, a CSI including a specific TRP (=CMR) may be prioritized, or the base station may set the priority.

In the present disclosure, it is assumed that a UE may freely select N as a value between 1 and M, but if a range of N is given in a range other than the range between 1 and M or is set to a specific value, i is adjusted and applied in a proposed formula according to the corresponding range.

Although it is assumed in the present disclosure that N CMRs among M CMRs may be freely selected for a given N, in this case, a CSI computation amount increases, and thus the number of CPUs increases. To solve this problem, when N CMRs among M CMRs are selected, it may be limited such that a specific CMR should be included. For example, it may be limited such that a first CMR should be included.

Although it is assumed that M CMRs are configured in the above proposal, this proposal may also be applied even when one CMR consisting of M port groups is configured. For example, M=4 and 32-port CSI-RS are configured as one CMR, 8 ports form one port group, and a total of 4 port groups (e.g., port groups 0 to 3) are configured, and different QCL RSs or TCI states may be configured for the port groups, respectively. In this case, one CMR is applied by being interpreted/replaced as one port group in the above proposal.

Even if it is not a CJT environment, the proposed method may be used from a Network Energy Saving (NES) perspective. For example, to determine whether a UE is capable of turning off some of antenna ports while showing 32 antenna ports to the UE, a base station may group them by 8 antenna ports and then report CSI according to a combination of antenna port groups. Even if some antenna ports are grouped to turn on/off some antenna ports for the purpose of energy saving (without configuring different QCL type D source RSs between antenna port groups as in the CJT scenario), one CMR is applied by being interpreted/replaced as one port group in the above proposal.

The parameters mentioned in the above disclosure, a presence or non-presence of application of the method proposed in the above disclosure, etc. may be indicated by the base station to the UE, reported by the UE to the base station, or set to fixed values.

In addition, when reporting CJT CSI, a UE does not expect a base station to configure that CRI is reported together with respect to the corresponding CSI. This is because the CSI processing complexity of the UE increases excessively when an operation of selecting a CSI-RS as a CRI and an operation of computing CJT CSI for the selected CSI-RS are performed together. As a result, when the base station configures CJT CSI to be reported, the base station does not configure a CRI to be reported together with respect to the corresponding CSI.

The present disclosure applies the proposed method on the assumption of cooperative transmission/reception between 2 TRPs for convenience of explanation, but may be extended to three or more multi-TRP environments and may be extended to multi-panel environments as well. Different TRPs may be recognized by a UE as different TCI states, and reception/transmission of data/DCI/UCI by a UE using TCI state #1 means that data/DCI/UCI is received/transmitted from/to TRP 1.

In the present disclosure, Transmission Opportunity (TO) refers to channels transmitted at different times, respectively when a plurality of channels are TDMed, channels transmitted at different frequencies/RBs, respectively when FDMed, and channels transmitted on different layers/beams/DM-RS ports, respectively when SDMed. One TCI state is mapped to each TO. In the case of repeatedly transmitting the same channel, complete DCI/data/UCI is transmitted at one TO and a receiving end receives several TOs to increase a reception success rate.

FIG. 8 is a flowchart of an example in which a UE transmits CSI related to M-TRP (multiple transmission and reception point) based CJT (Coherent Joint Transmission) according to embodiments of the present disclosure.

Referring to FIG. 8, in step A05, a UE receives information on a plurality of measurement resources corresponding to M-TRP from a BS. A plurality of the measurement resources include at least one of a Channel Measurement Resource (CMR) and an Interference Measurement Resource (IMR).

However, prior to the step A05, the UE may transmit UE capability information related to the M-TRP-based CJT to the BS. In this case, the UE capability information includes information on the number of CPUs supportable per the number of CMRs.

Next, in step A10, the UE computes Channel Status Information (CSI) related to the M-TRP-based CJT based on a plurality of the measurement resources.

Here, the number of CSI Processing Units (CPUs) for computing the CSI related to the M-TRP-based CJT may be determined based on the number of CMRs.

More specifically, the number of CPUs for computing the CSI related to the M-TRP-based CJT is determined based on the number of CMR combinations composed of at least one CMR and the number of CPUs corresponding to each of the CMR combinations. The number of CPUs for computing the CSI related to the M-TRP-based CJT may be represented as determined as $\sum_{i=1,2,\ldots,M}^{M}\left(i * C_i^M\right)$ (where M is the number of CMRs).

Meanwhile, the UE may receive, from the BS, a transmission request signal of the CSI related to the M-TRP-based CJT. In this case, a first minimum time interval between receiving the transmission request signal and transmitting the CSI related to the M-TRP-based CJT and a second minimum time interval between receiving all the measurement resources configured by the BS for reporting the CSI related to the M-TRP-based CJT and transmitting the CSI related to the M-TRP-based CJT may be determined based on the number of the measurement resources.

Finally, in step A15, the UE transmits the CSI related to the M-TRP-based CJT to the BS.

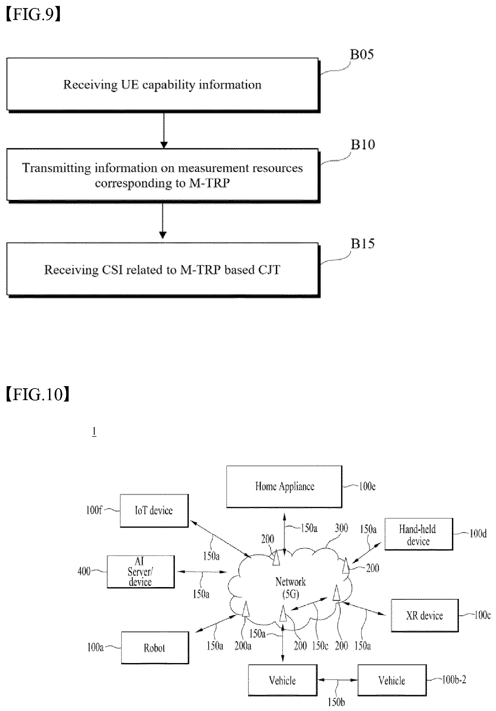

FIG. 9 is a flowchart of an example in which a BS receives CSI related to an M-TRP-based CJT according to embodiments of the present disclosure.

Referring to FIG. 9, in step B05, a BS receives UE capability information related to an M-TRP-based CJT from a UE. In particular, the UE capability information includes information on the number of CSI Processing Units (CPUs) supportable by a UE for each number of Channel Measurement Resources (CMR).

Next, in step B10, the BS transmits information on a plurality of measurement resources corresponding to the M-TRP to the UE. A plurality of the measurement resources may consist of at least one CMR and at least one Interference Measurement Resource (IMR).

Furthermore, in step B15, the BS receives Channel Status Information (CSI) related to the M-TRP-based CJT, computed based on a plurality of the measurement resources, from the UE. Here, the number of CPUs of the UE (i.e., the number of CPUs of the UE, assumed by the BS) for computing the CSI related to the M-TRP-based CJT is determined based on the number of CMRs among the measurement resources. More specifically, the number of CPUs for computing the CSI related to the M-TRP-based CJT is determined based on the number of CMR combinations composed of at least one CMR and the number of CPUs corresponding to each of the CMR combinations. The number of CPUs for computing the CSI related to the M-TRP-based CJT may be represented as determined as $\sum_{i=1,2,\ldots,M}^{M}\left(i * C_i^M\right)$ (where M is the number of CMRs).

FIG. 10 illustrates an exemplary communication system to which the embodiment is applied.

Referring to FIG. 10, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

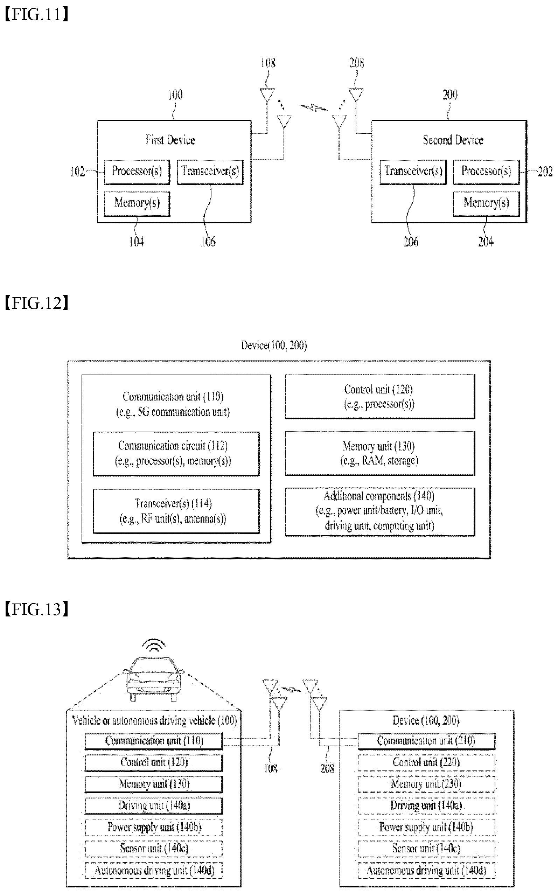

FIG. 11 illustrates exemplary wireless devices to which the embodiment is applicable.

Referring to FIG. 11, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 10.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 12 illustrates other exemplary wireless devices to which the embodiment is applied. The wireless devices may be implemented in various forms according to a use case/service (see FIG. 10).

Referring to FIG. 12, wireless devices 100 and 200 may correspond to the wireless devices 100 and 200 of FIG. 11 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 11. For example, the transceiver(s) 114 may include the one or more transceivers 106 and 206 and/or the one or more antennas 108 and 208 of FIG. 11. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 10), the vehicles (100b-1 and 100b-2 of FIG. 10), the XR device (100c of FIG. 10), the hand-held device (100d of FIG. 10), the home appliance (100e of FIG. 10), the IoT device (100f of FIG. 10), a digital broadcast terminal, a hologram device, a public safety device, an MTC device, a medicine device, a fintech device (or a finance device), a security device, a climate/environment device, the AI server/device (400 of FIG. 10), the BSs (200 of FIG. 10), a network node, etc. The wireless device may be used in a mobile or fixed place according to a use-example/service.

In FIG. 12, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 13 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 12 illustrates other exemplary wireless devices to which the embodiment is applied. The wireless devices may be implemented in various forms according to a use case/service. (see FIG. 10)

Referring to FIG. 12, wireless devices 100 and 200 may correspond to the wireless devices 100 and 200 of FIG. 11 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 11. For example, the transceiver(s) 114 may include the one or more transceivers 106 and 206 and/or the one or more antennas 108 and 208 of FIG. 11. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 10), the vehicles (100b-1 and 100b-2 of FIG. 10), the XR device (100c of FIG. 10), the hand-held device (100d of FIG. 10), the home appliance (100e of FIG. 10), the IoT device (100f of FIG. 10), a digital broadcast terminal, a hologram device, a public safety device, an MTC device, a medicine device, a fintech device (or a finance device), a security device, a climate/environment device, the AI server/device (400 of FIG. 10), the BSs (200 of FIG. 10), a network node, etc. The wireless device may be used in a mobile or fixed place according to a use-example/service.

In FIG. 12, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 13 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 13, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 12, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

It will be apparent to those skilled in the art that the disclosure may be embodied in other specific forms without departing from the scope of the present disclosure. Accordingly, the above detailed description should not be construed as limiting in all respects but should be considered as illustrative. The scope of the disclosure should be determined by a reasonable interpretation of the appended claims, and all changes within the equivalent scope of the present disclosure are intended to be included in the scope of the disclosure.

## INDUSTRIAL APPLICABILITY

The disclosure is applicable to UEs, BSs, or other apparatuses in a wireless mobile communication system.

## Claims

1.  A method performed by a User Equipment (UE) in a wireless communication system, the method comprising:

    receiving, from a Base Station (BS), information on a plurality of measurement resources related to a Multiple Transmission and Reception Point (M-TRP);
    computing, Channel Status Information (CSI) related to M-TRP based Coherent Joint Transmission (CJT) based on a plurality of the measurement resources; and
    transmitting, to the BS, the CSI related to the M-TRP based CJT,
    wherein the number of CSI Processing Units (CPUs) for computing the CSI related to the M-TRP based CJT is determined based on the number of Channel Measurement Resources (CMRs) among the measurement resources.

2.  The method of claim 1, wherein the number of the CPUs for computing the CSI related to the M-TRP based CJT is determined based on the number of CMR combinations comprising at least one CMR farm and the number of the CPUs related to each of the CMR combinations.

3.  The method of claim 1, wherein the number of the CPUs for computing the M-TRP based CJT is determined as

    $$\sum_{i=1,2,\ldots,M}^{M}\left(i * C_i^M\right)$$ (where M is the number of the CMRs).

4. The method of claim 1, further comprising receiving, from the BS, a transmission request signal of a CSI related to the M-TRP based CJT,
wherein a first minimum time interval between receiving the transmission request signal and transmitting the CSI related to the M-TRP-based CJT and a second minimum time interval between receiving all the measurement resources configured by the BS for reporting the CSI related to the M-TRP-based CJT and transmitting the CSI related to the M-TRP-based CJT is determined based on the number of the CMRs.

5. The method of claim 1, further comprising transmitting UE capability information related to the M-TRP-based CJT, wherein the UE capability information comprises information on the number of CPUs supportable per the number of the CMRs.

6. The method of claim 1, wherein a plurality of the measurement resources further comprise an Interference Measurement Resource (IMR).

7. A User Equipment (UE) in a wireless communication system, the UE comprising:

at least one transceiver;
at least one processor; and
at least one computer memory operably connectable to the at least one processor and storing instructions enabling the at least one processor to perform operations when executed, the operations comprising:

receiving, from a Base Station (BS), information on a plurality of measurement resources related to a Multiple Transmission and Reception Point (M-TRP);
computing, Channel Status Information (CSI) related to M-TRP based Coherent Joint Transmission (CJT) based on a plurality of the measurement resources; and
transmitting, to the BS, the CSI related to the M-TRP based CJT,
wherein the number of CSI Processing Units (CPUs) for computing the CSI related to the M-TRP based CJT is determined based on the number of Channel Measurement Resources (CMRs) among the measurement resources.

8. The UE of claim 7, wherein the number of the CPUs for computing the CSI related to the M-TRP based CJT is determined based on the number of CMR combinations comprising at least one CMR farm and the number of the CPUs related to each of the CMR combinations.

9. The UE of claim 7, wherein the number of the CPUs for computing the M-TRP based CJT is determined as

$\sum_{i=1,2,\ldots,M}^{M} \left( i * C_i^M \right)$ (where M is the number of the CMRs).

10. The UE of claim 7, wherein the operations further comprise receiving a transmission request signal of a CSI related to the M-TRP based CJT,
wherein a first minimum time interval between receiving the transmission request signal and transmitting the CSI related to the M-TRP-based CJT and a second minimum time interval between receiving all the measurement resources configured by the BS for reporting the CSI related to the M-TRP-based CJT and transmitting the CSI related to the M-TRP-based CJT is determined based on the number of the CMRs.

11. The UE of claim 7, wherein the operations further comprise transmitting UE capability information related to the M-TRP-based CJT and wherein the UE capability information comprises information on the number of CPUs supportable per the number of the CMRs.

12. The UE of claim 7, wherein a plurality of the measurement resources further comprise an Interference Measurement Resource (IMR).

13. An apparatus for processing in a wireless communication system, the apparatus comprising:

at least one processor; and
at least one computer memory operably connectable to the at least one processor and storing instructions enabling the at least one processor to perform operations for a User Equipment (UE) when executed, the operations comprising:

receiving, from a Base Station (BS), information on a plurality of measurement resources related to a Multiple Transmission and Reception Point (M-TRP);

computing, Channel Status Information (CSI) related to M-TRP based Coherent Joint Transmission (CJT) based on a plurality of the measurement resources; and

transmitting, to the BS, the CSI related to the M-TRP based CJT,

wherein the number of CSI Processing Units (CPUs) for computing the CSI related to the M-TRP based CJT is determined based on the number of Channel Measurement Resources (CMRs) among the measurement resources.

14. A computer-readable storage medium storing at least one program code comprising instructions enabling at least one processor to perform operations for a User Equipment (UE) when executed, the operations comprising:

receiving, from a Base Station (BS), information on a plurality of measurement resources related to a Multiple Transmission and Reception Point (M-TRP);

computing, Channel Status Information (CSI) related to M-TRP based Coherent Joint Transmission (CJT) based on a plurality of the measurement resources; and

transmitting, to the BS, the CSI related to the M-TRP based CJT,

wherein the number of CSI Processing Units (CPUs) for computing the CSI related to the M-TRP based CJT is determined based on the number of Channel Measurement Resources (CMRs) among the measurement resources.

15. A method performed by a Base Station (BS) in a wireless communication system, the method comprising:

receiving, from a User Equipment (UE), UE capability information related to a Multiple Transmission and Reception Point (M-TRP) based Coherent Joint Transmission (CJT);

transmitting, to the UE, information on a plurality of measurement resources related to the M-TRP; and

receiving, from the UE RSU, Channel Status Information (CSI) related to the M-TRP based CJT computed based on a plurality of the measurement resources,

wherein the UE capability information comprises information on the number of CSI Processing Units (CPUs) supportable by the UE per the number of Channel Measurement Resources (CMRs) among the measurement resources and

wherein the number of the CPUs for computing the CSI related to the M-TRP based CJT is determined based on the number of the CMRs.

16. The method of claim 15, wherein the number of the CPUs for computing the CSI related to the M-TRP based CJT is determined based on the number of CMR combinations comprising at least one CMR farm and the number of the CPUs related to each of the CMR combinations.

17. The method of claim 15, wherein the number of the CPUs for computing the M-TRP based CJT is determined as

$$\sum_{i=1,2,...,M}^{M}\left(i * C_i^M\right)$$ (where M is the number of the CMRs).

18. A Base Station (BS) in a wireless communication system, the BS comprising:

at least one transceiver;

at least one processor; and

at least one computer memory operably connectable to the at least one processor and storing instructions enabling the at least one processor to perform operations when executed, the operations comprising:

receiving, from a User Equipment (UE), UE capability information related to a Multiple Transmission and Reception Point (M-TRP) based Coherent Joint Transmission (CJT);

transmitting, to the UE, information on a plurality of measurement resources related to the M-TRP; and

receiving, from the UE RSU, Channel Status Information (CSI) related to the M-TRP based CJT computed based on a plurality of the measurement resources,

wherein the UE capability information comprises information on the number of CSI Processing Units (CPUs) supportable by the UE per the number of Channel Measurement Resources (CMRs) among the measurement resources and

wherein the number of the CPUs for computing the CSI related to the M-TRP based CJT is determined based on the number of the CMRs.

19. The BS of claim 18, wherein the number of the CPUs for computing the CSI related to the M-TRP based CJT is determined based on the number of CMR combinations comprising at least one CMR farm and the number of the CPUs related to each of the CMR combinations.

20. The BS of claim 18, wherein the number of the CPUs for computing the M-TRP based CJT is determined as

$$\sum_{i=1,2,\ldots,M}^{M}\left(i * C_i^M\right)$$ (where M is the number of the CMRs).

【FIG.1】

【FIG.2】

【FIG.3】

Resource grid

A carrier
(up to 3300 subcarriers, i. e., 275 RBs)

A BWP

1 RB = 12 subcarriers

1 RE

1 subcarrier

1 symbol

【FIG.4】

Long PUSCH

PDCCH

Gap

PDSCH/PUSCH

Short PUSCH

Long PUSCH

1 Slot

f

t

【FIG.5】

DL assignment-to-PDSCH offset (K0)

| PDCCH | | | | PDSCH | | | | | | PUCCH | |

slot

PDSCH-to-HARQ-ACK reporting offset (K1)

【FIG.6】

UL grant-to-PUSCH offset (K2)

| PDCCH | | | | | PUSCH | | |

【FIG.7】

【FIG.8】

【FIG.9】

```
┌─────────────────────────────────────────┐
│                                         │  B05
│     Receiving UE capability information  │
│                                         │
└─────────────────────────────────────────┘
                    │
                    ▼
┌─────────────────────────────────────────┐
│                                         │  B10
│  Transmitting information on measurement │
│      resources corresponding to M-TRP    │
│                                         │
└─────────────────────────────────────────┘
                    │
                    ▼
┌─────────────────────────────────────────┐
│                                         │  B15
│   Receiving CSI related to M-TRP based  │
│                  CJT                     │
└─────────────────────────────────────────┘
```

【FIG.10】

【FIG.11】

【FIG.12】

Device(100, 200)

【FIG.13】

## INTERNATIONAL SEARCH REPORT

| | International application No. |
|---|---|
| | **PCT/KR2023/010628** |

### A. CLASSIFICATION OF SUBJECT MATTER

**H04B 7/06**(2006.01)i; **H04B 7/024**(2017.01)i; **H04W 24/08**(2009.01)i; **H04W 52/02**(2009.01)i; **H04B 17/345**(2015.01)i; **H04B 7/08**(2006.01)i

According to International Patent Classification (IPC) or to both national classification and IPC

### B. FIELDS SEARCHED

Minimum documentation searched (classification system followed by classification symbols)

H04B 7/06(2006.01); H04B 7/024(2017.01); H04L 1/00(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: M-TRP(multiple transmission and reception point), CJT(Coherent Joint Transmission), CSI(Channel Status Information), CMR(Channel Measurement Resource)

### C. DOCUMENTS CONSIDERED TO BE RELEVANT

| Category* | Citation of document, with indication, where appropriate, of the relevant passages | Relevant to claim No. |
|---|---|---|
| Y | US 2021-0367728 A1 (QUALCOMM INCORPORATED) 25 November 2021 (2021-11-25)<br>See paragraph [0082]; claims 1 and 11; and figure 4C. | 1-3,5-9,11-20 |
| A | | 4,10 |
| Y | KR 10-2022-0050936 A (LG ELECTRONICS INC.) 25 April 2022 (2022-04-25)<br>See paragraphs [0150], [0366], [0418], [0514] and [0800]. | 1-3,5-9,11-20 |
| A | KR 10-2021-0081425 A (TELEFONAKTIEBOLAGET LM ERICSSON(PUBL)) 01 July 2021 (2021-07-01)<br>See paragraphs [0127]-[0138]; claim 1; and figure 10. | 1-20 |
| A | KR 10-2021-0032355 A (ASUSTEK COMPUTER INCORPORATION) 24 March 2021 (2021-03-24)<br>See paragraphs [0702]-[0705]; claim 1; and figure 25. | 1-20 |

☑ Further documents are listed in the continuation of Box C.   ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2023** | **03 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/010628** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2021-213656 A1 (NOKIA TECHNOLOGIES OY) 28 October 2021 (2021-10-28)<br>See paragraphs [0038]-[0047]; claim 1; and figures 1-2. | 1-20 |

Form PCT/ISA/210 (second sheet) (July 2022)

**INTERNATIONAL SEARCH REPORT**
Information on patent family members

International application No.

**PCT/KR2023/010628**

| Patent document cited in search report | | | Publication date (day/month/year) | Patent family member(s) | | | Publication date (day/month/year) |
|---|---|---|---|---|---|---|---|
| US | 2021-0367728 | A1 | 25 November 2021 | US | 11652589 | B2 | 16 May 2023 |
| KR | 10-2022-0050936 | A | 25 April 2022 | CN | 114731193 | A | 08 July 2022 |
| | | | | EP | 4106220 | A1 | 21 December 2022 |
| | | | | JP | 2023-508964 | A | 06 March 2023 |
| | | | | KR | 10-2508712 | B1 | 14 March 2023 |
| | | | | US | 11515918 | B2 | 29 November 2022 |
| | | | | US | 11770170 | B2 | 26 September 2023 |
| | | | | US | 2022-0239358 | A1 | 28 July 2022 |
| | | | | US | 2023-0087177 | A1 | 23 March 2023 |
| | | | | WO | 2021-162517 | A1 | 19 August 2021 |
| KR | 10-2021-0081425 | A | 01 July 2021 | EP | 3874662 | A1 | 08 September 2021 |
| | | | | US | 2021-0391967 | A1 | 16 December 2021 |
| | | | | WO | 2020-089863 | A1 | 07 May 2020 |
| KR | 10-2021-0032355 | A | 24 March 2021 | CN | 107666340 | A | 06 February 2018 |
| | | | | CN | 107666340 | B | 19 February 2021 |
| | | | | EP | 3276851 | A1 | 31 January 2018 |
| | | | | JP | 2018-029334 | A | 22 February 2018 |
| | | | | JP | 6562981 | B2 | 21 August 2019 |
| | | | | KR | 10-2018-0013811 | A | 07 February 2018 |
| | | | | KR | 10-2020-0041302 | A | 21 April 2020 |
| | | | | KR | 10-2346828 | B1 | 03 January 2022 |
| | | | | TW | 201804741 | A | 01 February 2018 |
| | | | | TW | I721201 | B | 11 March 2021 |
| | | | | US | 11201708 | B2 | 14 December 2021 |
| | | | | US | 11652592 | B2 | 16 May 2023 |
| | | | | US | 2018-0034612 | A1 | 01 February 2018 |
| | | | | US | 2022-0060301 | A1 | 24 February 2022 |
| WO | 2021-213656 | A1 | 28 October 2021 | None | | | |

Form PCT/ISA/210 (patent family annex) (July 2022)